Europäisches Patentamt

European Patent Office

Office européen des brevets

(19)

(11) Numéro de publication: **0 165 869**
**B1**

(12) **FASCICULE DE BREVET EUROPEEN**

(45) Date de publication du fascicule du brevet:
**07.01.88**

(51) Int. Cl.⁴: **B 21 D 26/02**, B 23 K 20/02

(21) Numéro de dépôt: **85401189.7**

(22) Date de dépôt: **14.06.85**

(54) **Dispositif pour le formage et le soudage de flans en une matière superplastique.**

(30) Priorité: **19.06.84 FR 8409572**

(43) Date de publication de la demande:
**27.12.85 Bulletin 85/52**

(45) Mention de la délivrance du brevet:
**07.01.88 Bulletin 88/1**

(84) Etats contractants désignés:
**DE GB IT NL SE**

(56) Documents cités:
**DE - A - 2 308 303**
**GB - A - 1 231 428**
**GB - A - 2 076 722**
**US - A - 2 882 588**
**US - A - 3 529 458**
**US - A - 3 595 060**
**US - A - 3 699 640**
**US - A - 3 934 441**
**US - A - 3 974 673**

(73) Titulaire: **AEROSPATIALE Société Nationale Industrielle, 37, Boulevard de Montmorency, F-75781 Paris Cédex 16 (FR)**

(72) Inventeur: **Dumargue, Guy, 52 rue de Bellevue, F-92100 Boulogne (FR)**
Inventeur: **Comercon, Jean Louis, 15, rue Diderot, F-78110 Le Vesinet (FR)**

(74) Mandataire: **Bonnetat, Christian et al, Cabinet PROPI Conseils 23 rue de Léningrad, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un dispositif pour le formage et le soudage de flans qui sont placés dans un moule comportant des matrices délimitant une empreinte d'une pièce à obtenir et qui sont soumis aux conditions pour lesquelles leur matière constitutive est superplastique, le fromage résultant d'une différence de pression fluide appliquée entre les deux faces de chacun desdits flans de façon que ceux-ci se déforment plastiquement pour venir épouser une partie de ladite empreinte et le soudage des flans résultant d'une pression mécanique et/ou fluide appliquée entre lesdits flans, comme décrit dans le préambule de la revendication 1.

On sait que les matières superplastiques présentent la propriété de se déformer, lorsqu'elles sont dans les conditions appropriées, d'une manière semblable à celle du verre fondu et des matières plastiques; en effet, leur allongement à la rupture est alors compris entre 300% et plus de 2000%, contre moins de 100% dans des conditions normales. Il est donc possible de travailler ces matières avec des méthodes voisines de celles mises en oeuvre pour les matières plastiques, en particulier le soufflage.

Certaines matières, telles que les alliages Ph-Sn et Al-Zn, présentent la propriété de superplasticité à une température modérée et c'est avec elles que les premiers essais de formage ont été effectués, en raison de leur mise en oeuvre facile (voir à ce sujet l'article «Superplasticity in an Al-Zn Alloy» dans Transactions of the A.S.M., volume 57, 1964, pages 980 à 990).

Cependant, la plupart des matières ne sont superplastiques qu'à une température élevée, généralement supérieure à la moitié de leur température de fusion exprimée en degrés kelvins.

On connaît déjà, notamment par les brevets US-A-3 340 101, US-A-3 595 060, FR-A-2 245 428 et EP-A-0 018 255, des procédés pour le formage d'une pièce à partir d'un flan qui est placé dans un moule comportant l'empreinte de la pièce à obtenir et qui est soumis aux conditions pour lesquelles sa matière constitutive est superplastique, le formage résultant d'une pressione et/ou dépression fluide appliquée audit flan de façon que celui-ci se déforme pour venir épouser ladite empreinte.

De tels procédés de formage présentent de nombreux avantages
– une économie de matière première importante, par rapport au matriçage et à l'emboutissage;
– possibilité de préparer les flans avant utilisation (usinage) ce qui permet d'augmenter l'économie de matière et de réduire le dimensionnement, et donc le coût, de l'outillage, tout en obtenant une pièce finie;
– possibilité de fabrication à partir de tôles standard du commerce;
– possibilité de réalisation de très grandes pièces (les limites étant celles des moyens de chauffage);
– possibilité d'utiliser des flans provenant de tôles soudées (pour les formats hors standard, les renforts locaux, etc...);
– possibilité d'associer, à l'opération de formage simultanée de plusieurs flans, une opération de soudage par diffusion, également simultanée desdits flans;

– obtention de pièces sans contraintes résiduelles;
– formage sans plissage;
– précision relative de forme inférieure à 10⁻³;
– état de surface (du côté empreinte) identique à celui de l'outillage;
– gain d'usinage des pièces formées, seule la face empreinte devant éventuellement être usinée.

Toutefois, ces procédés connus, malgré leurs nombreux avantages, n'ont pu être largement développés, car leur mise en oeuvre a été effectuée jusqu'à présent avec des outils, du type presses chauffantes, prévus d'origine pour d'autres techniques et adaptés tant bien que mal au formage superplastique. Ces outils utilisés jusqu'à présent, non spécifiques du formage superplastique et du soudage par diffusion, se sont révélés coûteux et relativement mal adaptés.

Par ailleurs, par le document GB-A-1 231 428, on connaît déjà un dispositif pour le formage d'un flan en une matière pouvant devenir superplastique, ledit flan étant placé dans un moule comportant des matrices coopérantes délimitant une empreinte d'une pièce à obtenir et étant soumis aux conditions pour lesquelles sa matière constitutive est superplastique, le formage résultant d'une différence de pression fluide appliquée entre les deux faces dudit flan de façon que celui-ci se déforme plastiquement pour venir épouser ladite empreinte, lesdites matrices coopérantes étant respectivement montées sur un bâti inférieur et sur un bâti supérieur dudit dispositif, ledit bâti supérieur pouvant être déplacé verticalement entre une position rapprochée et une position écartée par rapport audit bâti inférieur, ledit dispositif comportant des moyens de chauffage pour amener ledit flan à l'état superplastique et des moyens pour appliquer entre les deux faces dudit flan une différence de pression fluide.

Cependant, ce dispositif de formage du document GB-A-1 231 428 ne concerne que le formage d'un seul flan à la fois et ne peut en aucun cas former simultanément deux flans devant par ailleurs être soudés entre eux.

La présente invention a pour objet de remédier à cet inconvénient et de permettre la réalisation d'un outil autonome spécifique de coûts relativement peu importants susceptible de permettre simultanément le formage et le soudage de flans en matières superplastiques.

A cette fin, selon l'invention, le dispositif pour le formage et le soudage de flans en une matière pouvant devenir superplastique, lesdits flans étant placés dans un moule comportant des matrices coopérantes délimitant une empreinte d'une pièce à obtenir et étant soumis aux conditions pour lesquelles leur matière constitutive est superplastique, le formage résultant d'une différence de pression fluide appliquée entre les deux faces de chacun desdits flans de façon que ceux-ci se déforment plastiquement pour venir épouser une partie de ladite empreinte et le soudage des flans résultant d'une pression mécanique et/ou fluide appliquée entre lesdits flans, lesdites matrices coopérantes étant respectivement montées sur un bâti inférieur et sur un bâti supérieur dudit dispositif, ledit bâti supérieur pouvant être déplacé verticalement entre une position rapprochée et une position écartée par rapport audit bâti inférieur, ledit dispositif comportant des moyens de chauffage pour amener lesdits flans à l'état superplastique et des moyens pour appliquer entre les deux faces de chacun desdits flans une différence de pression fluide, est caractérisé en ce qu'il comporte des moyens susceptibles d'isoler au moins partiellement de l'extérieur la zone de travail desdits flans et comportant, d'une part, une paroi périphérique solidaire du bâti supérieur, entourant la matrice portée par celui-ci et faisant saillie vers le bas par rapport à ladite matrice et, d'autre part, une rainure périphérique solidaire du bâti inférieur, entourant la matrice portée par ce dernier et remplie d'une matière réfractaire divisée, en ce que ledit bâti inférieur est constitué d'une base et d'une partie mobile verticalement et portant la matrice et la rainure périphérique, en ce qu'un vessie gonflable est interposée entre ladite base et ladite partie mobile dudit bâti inférieur, en ce que des moyens de verrouillage mécaniques sont prévus pour solidariser ladite base et le bâti supérieur portant la paroi périphérique, lorsque ledit bâti supérieur est en position rapprochée, et en ce que, en position rapprochée et verrouillée dudit bâti supérieur par rapport à ladite base dudit bâti inférieur, la coopération des matrices est obtenue par commande de ladite vessie.

Ainsi, selon l'invention, l'effort de serrage des flans entre les matrices est obtenu par ladite vessie gonflable, par exemple alimentée en air comprimé. Grâce à une telle structure, l'effort de serrage des matrices peut être aisément ajusté en fonction des surfaces de flans à souder et la pression exercée sur ces surfaces est uniforme. Le contrôle de la pression du fluide d'alimentation de la vessie permet d'ajuster la pression de soudage, quelle que soit la distance entre les matrices, c'est-à-dire l'épaisseur desdits flans.

De plus, selon l'invention, grâce à la paroi périphérique solidaire du bâti supérieur et à la rainure périphérique solidaire du bâti inférieur remplie d'une matière réfractaire divisée, on peut effectuer le formage et le soudage des flans superplastiques en atmosphère neutre. En effet, en position rapprochée des deux bâtis, le bord inférieur de la paroi périphérique pénètre dans la matière réfractaire divisée pour isoler de l'extérieur l'espace entourant lesdites matrices. On peut alors évacuer cet espace pour y introduire un gaz neutre.

Avantageusement, la profondeur et la largeur de ladite rainure périphérique du bâti inférieur sont prévues pour permettre des variations de position verticale et horizontale de la paroi périphérique à l'intérieur de ladite rainure, par exemple dues à l'action de la vessie gonflable et/ou de la chaleur. La matière réfractaire divisée peut être constituée d'une couche inférieur de poudre surmontée d'une couche supérieure de granulats ou billes. Ainsi, l'étanchéité est d'autant meilleure que la paroi périphérique pénètre plus profondément dans ladite rainure.

Grâce à l'invention, on réalise donc l'étanchéité de l'espace autour des matrices, ce qui est un problème difficile à résoudre par suite des conditions de température élevées.

On remarquera que le document US-A-3 934 441 décrit un dispositif permettant de faire l'étanchéité autour de flans d'alliage de titane en cours de formage. Toutefois, dans ce dispositif antérieur, chaque flan est individuellement pincé entre les périphéries en regard de deux matrices, ce qui interdit le formage simultané de deux flans et le soudage de ceux-ci.

De préférence, notamment afin d'éviter la présence d'un système de guidage vertical de ladite partie mobile par rapport à ladite base, tout en étant assuré de l'appui isostatique des matrices l'une contre l'autre, ladite vessie est telle que ses faces opposées s'appuient à plat par de grandes surfaces, d'une part sur ladite base et d'autre part sur ladite partie mobile.

Afin de permettre une mise en place aussi précise que possible des flans entre les matrices, il est avantageux que l'accessibilité à la matrice inférieure du dispositif soit totale. Aussi, selon une particularité importante de la présente invention, ledit bâti inférieur est monté mobile pour pouvoir être déplacé entre une position pour laquelle il est à l'aplomb dudit bâti supérieur et une position pour laquelle il est complètement dégagé de cet aplomb, et vice-versa.

On remarquera qu'une telle disposition permet l'automatisation des opérations de chargement des flans sur la matrice inférieur et de déchargement des pièces formées et soudées obtenues à partir de ces flans. Une telle automatisation est d'autant plus justifiée que les flans doivent être chauffés à des températures élevées pour leur formage et leur soudage (de l'ordre de 1000°C), de sorte que les conditions de travail aux abords du dispositif peuvent être pénibles. On remarquera de plus que, les moyens de chauffage ne permettant d'atteindre de telles températures qu'au bout de temps relativement longs, ils peuvent alors rester branchés pendant le chargement des flans, afin de raccourcir la durée des cycles de formage et de soudage.

Grâce au verrouillage mécanique du bâti supérieur par rapport à la base du bâti inférieur, il est possible d'absorber les efforts appliqués entre les matrices pendant les opérations de formage et de soudage. Toutfois les deux bâtis inférieur et supérieur doivent pouvoir se déplacer l'un par rapport à l'autre. Il est donc avantageux de réaliser ce verrouillage mécanique de façon aussi simple que possible, sans faire intervenir d'éléments de guidage verticaux ou horizontaux. Selon une autre particularité de l'invention, le verrouillage mécanique du bâti supérieur sur la base du bâti inférieur est obtenu au moyen de broches amovibles traversant des trous qui sont pratiqués respectivement dans des parties desdits bâtis inférieur et supérieur et qui se trouvent en regard lorsque ledit bâti inférieur est à l'aplomb dudit bâti supérieur et que celui-ce se trouve dans sa position rapprochée.

De préférence, on prévoit un chemin de déplacement horizontal pour ledit bâti inférieur et, pour le bâti supérieur, des moyens de déplacement vertical prenant appui sur le support dudit chemin de déplacement horizontal. Ce support peut être constitué soit par le sol sur lequel repose le dispositif, soit par un socle spécialement prévu pour le dispositif.

Chaque matrice peut être chauffée par l'intermédiaire d'un plateau électrique chauffant qui la porte. Chacun de ces plateaux peut être divisé en plusieurs zones de chauffe régulées indépendamment les unes des autres. Ainsi, il est possible de réaliser au mieux les cycles de témpérature et d'obtenir le gradient de température désiré sur lesdites matrices.

Pour permettre l'isolation thermique des plateaux chauffants, il est avantageux que ceux-ci soient portés par des blocs thermiquement isolants. De tels blocs évitent l'utilisation d'un circuit de refrodissement, limitent les pertes énérgétiques et répartissent en efforts de pression sur l'ensemble de la surface desdits plateaux chauffants.

Les figures du dessin annexé feront bien comprendre comment l'invention peut être réalisée. Sur ces figures, des références identiques désignent des éléments semblables.

La figure 1 est une vue en perspective schématique, avec arrachements partiels, d'un mode de réalisation du dispositif selon l'invention.

La figure 2 est une vue en coupe schématique du dispositif selon l'invention, le bâti inférieur étant déplacé par rapport au bâti supérieur.

La figure 3 est une vue en coupe schématique du dispositif selon l'invention, le bâti inférieur étant verrouillé au bâti supérieur.

La figure 4 est une vue en coupe schématique du dispositif selon l'invention, en position de formage et de soudage.

La figure 5 montre en coupe partielle agrandie le joint d'étanchéité entourant les matrices.

La figure 6 illustre schématiquement une variante de réalisation du dispositif selon l'invention, où le sol remplace le socle inférieur.

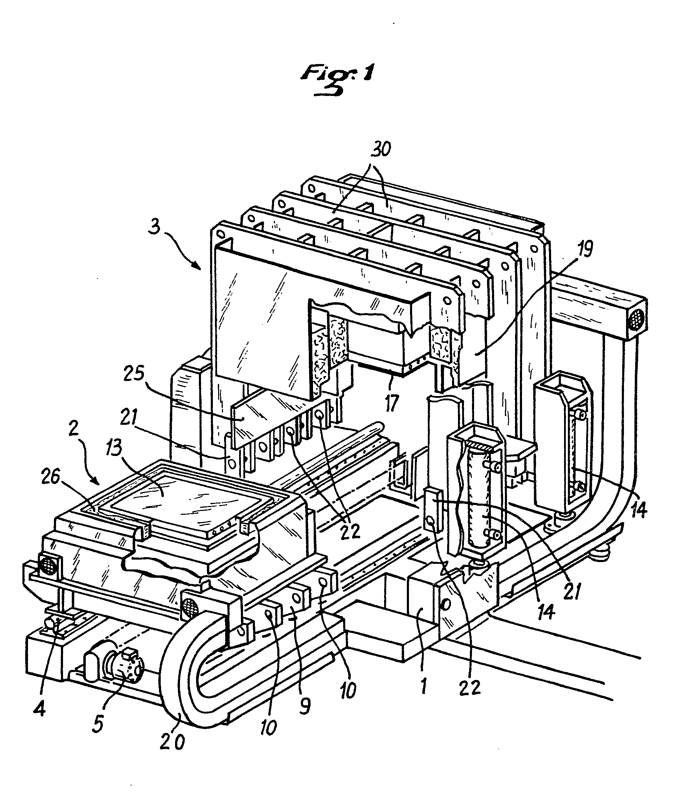

Le mode de réalisation du dispositif selon l'invention, montré par les figures 1 à 4, comporte un socle 1 sur lequel reposent un bâti inférieur 2 et un bâti supérieur 3.

Le bâti inférieur 2 est monté mobile horizontalement par rapport au support 1, grâce à un chemin de roulement ou de glissement 4 et à des moyens moteurs 5. Le bâti inférieur 2 est constitué d'une base 6 et d'une partie mobile supérieure 7, entre lesquelles est disposée une vessie gonflable 8. La base 6 repose sur le chemin de roulement ou de glissement 4 et comporte des pattes latérales 9, percées de trous 10. La partie mobile 7 porte une matrice 11 (non représentée sur la figure 1) susceptible d'être chauffée par un plateau életrique chauffant 12, reposant sur un bloc thermiquement isolant 13. La partie mobile 7 repose par son poids sur la base 6, aucun guidage vertical n'étant prévu pour ladite partie mobile, du fait que la vessie est au contact de la base 6 et de la partie mobile 7 par de larges surfaces planes. Une canalisation souple 20 permet le passage et la protection des câbles életriques entre le bâti 2 et le socle 1.

Le bâti supérieur 3 est monté mobile verticalement par rapport au socle 1, par l'intermédiaire de vérins 14. Le bâti supérieur 3 comporte un plateau supérieur 15 sur lequel est fixée une matrice 16, chauffée par un plateau électrique chauffant 17, thermiquement isolé du plateau 15 par un bloc isolant 18.

Le plateau supérieur 15 est solidaire de parois latérales verticales descendantes 19 pourvues, à leur partie inférieure, de pattes 21, percées de trous 22.

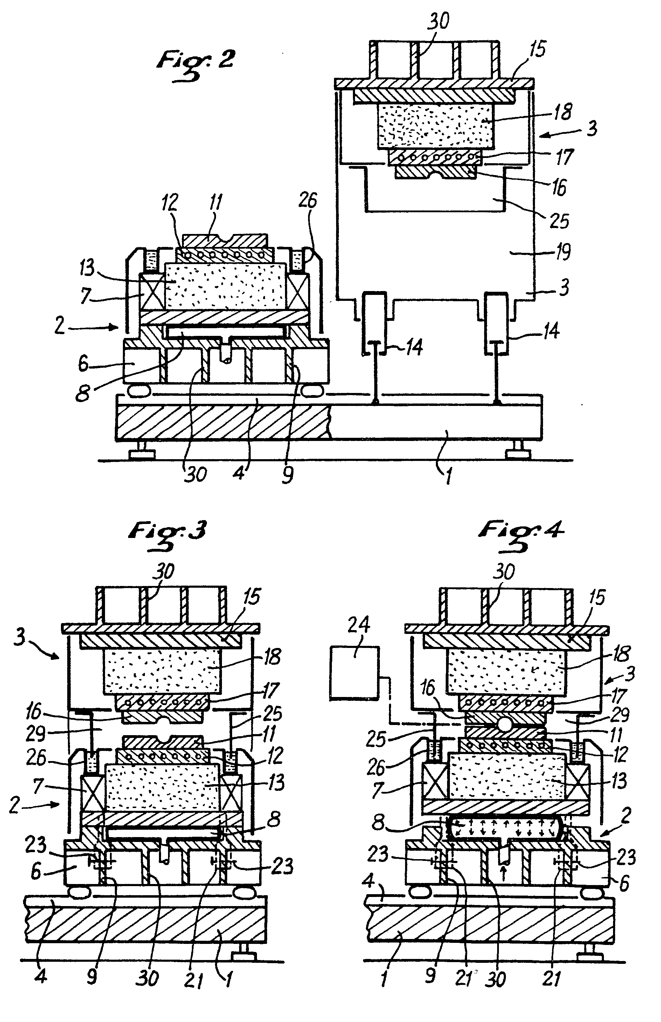

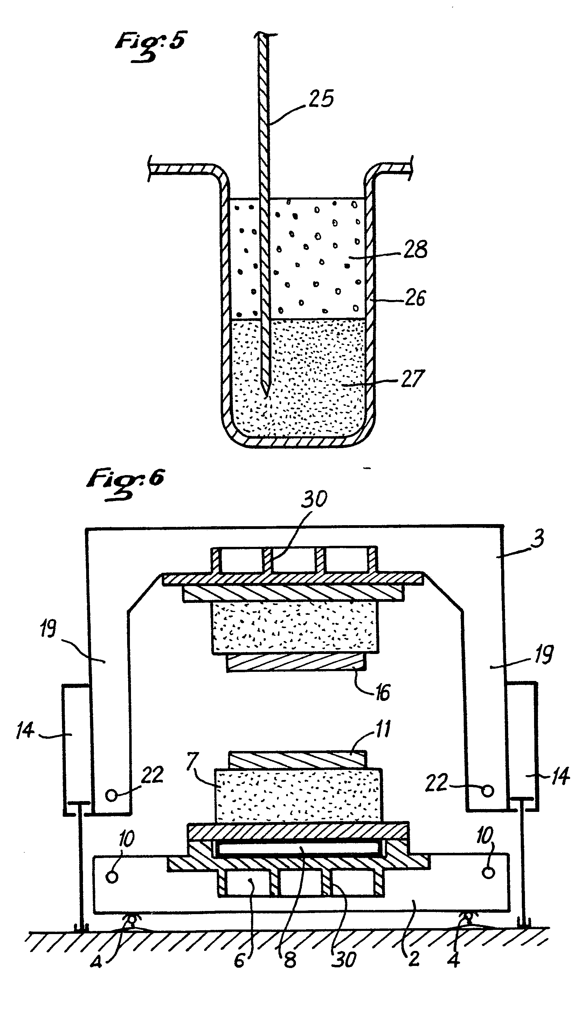

Grâce à la structure décrite ci-dessus, on voit que le bâti inférieur 2 peut occuper deux positions par translation horizontale: dans la première, représentée sur les figures 1 et 2, le bâti 2 est horizonatalement écartée du bâti 3, de sorte qu'il est aisé de mettre en place les flans à former et à souder sur la matrice inférieure 11 du dispositif; dans la seconde, représentée sur les figures 3 et 4, le bâti 2 se trouve à l'aplomb du bâti 3, en dessous de celui-ci. Le bâti 2 peut facilement passer de l'une de ces positions à l'autre par actionnement des moyens moteurs 5.

Par ailleurs, il ressort de ce qui précède que le bâti supérieur 3 peut également occuper deux positions par translation verticale: dans la première, représentée sur les figures 1 et 2, le bâti 3 est en position haute, tandis que dans la seconde, représentée sur les figures 3 et 4, il occupe sa position basse. Le passagge de la position haute à la position basse et réciproquement est aisée par l'actionnement des vérins 14.

Lorsque le bâti 2 est verticalement aligné avec le bâti 3 et que celui-ci est en position basse (figures 3 et 4), les trous 10 des pattes 9 et les trous 22 des pattes 21 sont alignés horizontalement, de sorte qu'il est possible d'introduire des broches 23 dans ces trous en regard, pour verrouiller mécaniquement la base 6 du bâti inférieur 2 et le bâti supérieur 3.

Grâce à un tel verrouillage mécanique, il est alors possible de réaliser le formage et le soudage de flans superplastique (non représentés) disposés entre les matrices 11 et 16; en effet, ces flans ayant été correctement mis en place sur la matrice inférieure 11 lorsque le bâti 2 était horizontalement écarté du bâti 3, on procède au gonflage de la vessie 8 (figure 4), de sorte que la partie mobile 7 est soulevée et que la matrice inférieure 11 vient presser les flans contre la matrice supérieure 16. Lesdits flans sont alors soumis à une élévation de température par l'intermédiaire des plateaux chauffants 12 et 17, à un formage superplastique par application d'une différence de pression entre leurs faces grâce à une source de pression ou de dépression 24 reliée auxdites matrices 11 et 16 et à un soudage par diffusion grâce à la pression exercée sur eux résultant du gonflage de la vessie 8.

Le processus de formage superplastique peut être du type de celui décrit dans EP-A-0 018255. Les régulations du chauffage exercé par les plateaux chauffants 12 et 17, de la différence de pression engendrée par la source 24 et de la pression entre les matrices 11 et 16 exercée par la vessie 8 peuvent être obtenues par la mise en oeuvre d'un microprocesseur (non représenté).

Afin que la zone de travail des flans puisse être en atmosphère de gaz neutre, on prévoit, autour des matrices 11 et 16, un joint se formant au moins dès que les bâtis 2 et 3 sont verrouillés (figure 3). Un tel joint comporte (voir également la figure 5), d'une part, une paroi périphérique 25, solidaire du bâti supérieur 3, entourant la matrice supérieure 16 et faisant saillie vers le bas par rapport à celle-ci et, d'autre part, une rainure périphérique 26, solidaire du bâti inférieur 2, entourant la matrice inférieure 11 et remplie d'une matière réfractaire divisée, par exemple une couche 27 de poudre d'alumine surmontée d'une couche 28 de billes de céramique.

Ainsi, dès que la paroi périphérique 25 pénètre dans la matière divisés 28 de la rainure périphérique 26 lors du passage du bâti 3 de sa position haute à sa position basse (figure 3), l'espace 29 entourant les matrices 11 et 16 et délimité par la paroi 25 est isolé de l'atmosphère extérieure. On peut donc remplacer l'air qu'il contient par un gaz neutre. La profondeur et la largeur de la rainure 26 sont prévues pour permettre, d'une part, l'élévation ultérieure de la partie mobile 7 (figures 4 et 5) et, d'autre part, des variations horizontales de position de la paroi 25 par rapport à la rainure 26, à cause des déformations à chaud.

Dans la variante de réalisation du dispositif selon l'invention, montrée par la figure 6, le socle horizontal 1 a été supprimé et le bâti inférieur 2 repose directement sur le sol par l'intermédiaire du chemin de déplacement 4. Dans ce cas, les vérins 14, au lieu d'être ancrés sur le socle 1, sont ancrés directement sur le sol.

**Revendications**

1. Dispositif pour le formage et le soudage de flans en une matière pouvant devenir superplastique, lesdits flans étant placés dans un moule comportant des matrices coopérantes délimitant une empreinte d'une pièce à obtenir et étant soumis aux conditions pour lesquelles leur matière constitutive est superplastique, le formage résultant d'une différence de pression fluide appliquée entre les deux faces de chacun desdits flans de façon que ceux-ci se déforment plastiquement pour venir épouser une partie de ladite empreinte et le soudage des flans résultant d'une pression mécanique et/ou fluide appliquée entre lesdits flans, lesdites matrices coopérantes (11, 16) étant respectivement montées sur un bâti inférieur (2) et sur un bâti supérieur (3) dudit dipositif, ledit bâti supérieur (3) pouvant être déplacé verticalement entre une position rapprochée et une position écartée par rapport audit bâti inférieur (2), ledit dispositif comportant des moyens de chauffage (12, 17) pour amener lesdits flans à l'état superplasique et des moyens (24) pour appliquer entre les deux faces de chacun desdits flans une différence de pression fluide, caractérisé en ce qu'il comporte des moyens susceptibles d'isoler au moins partiellement de l'extérieur la zone de travail desdits flans et comportant, d'une part, une paroi périphérique (25) solidaire du bâti supérieur (3), entourant la matrice (16) portée par celui-ci et faisant saillie vers le bas par rapport à ladite matrice (16) et, d'autre part, une rainure périphérique (26) solidaire du bâti inférieur (2), entourant la matrice (11) portée par ce dernier et remplie d'une matière réfractaire divisée (27, 28), en ce que ledit bâti inférieur (2) est constitué d'une base (6) et d'une partie (7) mobile verticalement et portant la matrice (11) et la rainure périphérique (26), en ce qu'une vessie gonflabel (8) est interposée entre ladite base (6) et ladite partie mobile (7) dudit bâti inférieur (2), en ce que des moyens de verroillage mécaniques (10, 22, 23) sont prévus pour solidariser ladite base (6) et le bâti supérieur (3) portant la paroi périphérique (25), lorsque ledit bâti supérieur est en position rapprochée, et en ce que, en position rapprochée et verrouillée dudit bâti supérieur (3) par rapport à ladite base (6) dudit bâti inférieur (2), la coopération des matrices (11, 16) est obtenue par commande de ladite vessie (8).

2. Dispositif selon la revendication 1, caractérisé en ce que ladite vessie (8) est telle que ses faces opposées s'appuient à plat par de grandes surfaces, d'une part sur ladite base (6) et d'autre part sur ladite partie mobile (7).

3. Dispositif selon l'une des revendications 1 ou 2, caractérisé en ce que ledit bâti inférieur (2) est monté mobile pour pouvoir être déplacé entre une position pour laquelle il est à l'aplomb dudit bâti supérieur (3) et une position pour laquelle il est complètement dégagé de cet aplomb, et vice-versa.

4. Dispositif selon la revendication 3, caractérisé en ce que lesdits moyens de verrouillage mécaniques sont constitués de broches amovibles (23) traversant des trous (10, 22) qui sont pratiqués respectivement dans des parties (10, 21) desdits bâtis inférieur et supérieur et qui se trouvent en regard lorsque ledit bâti inférieur (2) est à l'aplomb dudit bâti supérieur (3) et que celui-ci se trouve dans sa position rapprochée.

5. Dispositif selon l'une des revendications 3 ou 4, caractérisé en ce qu'il comporte un chemin de déplacement horizontal (4) pour ledit bâti inférieur (2) et, pour le bâti supérieur (3), des moyens de déplacement vertical (14) prenant appui sur le support dudit chemin de déplacement horizontal (4).

6. Dispositif selon l'une quelconque des revendications 1 à 5, caractérisé en ce que lesdites matrices (11, 16) sont chauffées par des plateaux électriques chauffants (12, 17) qui les portent.

7. Dispositif selon la revendication 6, caractérisé en ce que lesdits plateaux électriques chauffants (12, 17) sont portés par des blocs thermiquement isolants (13, 18).

**Patentansprüche**

1. Vorrichtung zum Formen und Schweissen von Platinen aus einem zur Superplastizität fähigen Material, wobei die Platinen in eine Form mit Matrizen gebracht werden, die das Nest eines zu erzielenden Teils begrenzen und die den Bedingungen unterworfen werden, für die ihre Materialbestandteile superplastisch sind, wobei die Verformung als Ergebnis einer Fluid-Druckdifferenz zwischen den beiden Flächen jeder der Platinen derart entsteht, dass diese sich plastisch verformen und an einem Teil des Nests anliegen, und wobei die Schweissung der Platinen als Ergebnis eines mechanischen und/oder Fluiddrucks zwischen den Platinen entsteht, wobei die Matrizen (11, 16) jeweils auf einem Untergestell (2) und einem Obergestell (3) der Vorrichtung montiert sind, wobei das Obergestell (3) vertikal zwischen einer zum Untergestell (2) angenäherten und einer von diesem entfernten Position verschoben werden kann, wobei die Vorrichtung Heizmittel (12, 17) zum Überführen der Platinen in den superplastischen Zustand und Mittel (24) zum Aufbringen einer Fluid-Druckdifferenz zwischen den beiden Flächen jeder der Platinen umfasst, dadurch gekennzeichnet, dass sie Mittel umfasst, die wenigstens teilweise den Arbeitsbereich der Platinen nach aussen isolieren können, und dass sie einerseits eine fest mit dem Obergestell (3) verbundene Umfangswand (25) um die vom Obergestell (3) getragene Matrize (16) umfasst, die nach unten über die Matrize (16) vorsteht, und andererseits eine fest mit dem Untergestell (2) verbundene Umfangsnut (26) um die vom Untergestell (2) getragene Matrize (11) umfasst, gefüllt mit einer aufgeteilten feuerfesten Substanz (27, 28), dass das Untergestell (2) aus einer Grundplatte (6) und einem vertikal verschiebbaren und die Matrize (11) und die Umfangsnut (26) tragenden Teil (7) besteht, dass zwischen der Grundplatte (6) und dem beweglichen Teil (7) des Unterteils (2) eine aufblasbare Blase (8) angeordnet ist, dass Mittel (10, 22, 23) zum mechanischen Verriegeln zwecks fester Verbindung der Grundplatte (6) und des die Umfangswand (25) tragenden Obergestells (3) vorgesehen sind, wenn das Obergestell sich in der angenäherten Position befindet, und dadurch, dass, in der angenäherten und verriegelten Position des Obergestells (3) mit Bezug auf die Grundplatte (6) des Untergestells (2), die Wirkungsweise der Matrizen (11, 16) durch Steuerung der Blase (8) erzielt wird.

2. Vorrichtung nach Anspruch 1, dadurch gekennzeichnet, dass die Blase (8) derart beschaffen ist, dass ihre gegenüberliegenden Flächen sich flach auf grossen Flächen abstützen, einerseits auf der Grundplatte (6) und andererseits auf dem beweglichen Teil (7).

3. Vorrichtung nach einem der Ansprüche 1 oder 2, dadurch gekennzeichnet, dass das Untergestell (2) beweglich angebracht ist, um zwischen einer Position, in der es sich in senkrechter Lage zum Obergestell (3) befindet, und einer Position, in der es sich völlig ausserhalb dieser senkrechten Lage befindet, verschoben werden zu können.

3. Vorrichtung nach Anspruch 3, dadurch gekennzeichnet, dass die Mittel zur mechanischen Verriegelung aus durch die Löcher (10, 22) ragenden, beweglichen Dornen (23) bestehen, die jeweils in Teilen (10, 21) des Unter- und des Obergestells angeordnet sind und die gegenüber angeordnet sind, wenn das Untergestell (2) sich in senkrechter Lage zum Obergestell (3), und dieses sich in der angenäherten Position befindet.

5. Vorrichtung nach einem der Ansprüche 3 oder 4, dadurch gekennzeichnet, dass sie einen horizontalen Verschiebeweg (4) für das Untergestell (2) sowie für das Obergestell (3) Mittel (14) zum vertikalen Verschieben umfasst, die sich auf dem Träger des horizontalen Verschiebewegs (4) abstützen.

6. Vorrichtung nach einem der Ansprüche 1 bis 5, dadurch gekennzeichnet, dass die Matrizen (11, 16) durch sie tragende elektrische Heizplatten (12, 17) erwärmt werden.

7. Vorrichtung nach Anspruch 6, dadurch gekennzeichnet, dass die elekrischen Heizplatten (12, 17) von thermisch isolierenden Blöcken (13, 18) getragen werden.

**Claims**

1. Device for forming and welding blanks in a material able to become superplastic, said blanks being placed in a mold comprising cooperating dies forming a stamp of a piece to be made and being subjected to conditions for which their constituent material is superplastic, forming resulting from a differential fluid pressure applied between the two faces of each of said blanks such that the latter plastically distort to fit a portion of said stamp and welding resulting from a mechanical and/or fluid pressure applied between said blanks, said cooperating dies (11, 16) being respectively mounted on a lower frame (2) and on an upper frame (3) of said device, said upper frame (3) being vertically movable between a position close to said lower frame (2) and a position away from said lower frame (2), said device comprising heating means (12, 17) for bringing said blanks to the superplastic state and means (24) for applying a differential fluid pressure between the two faces of each of said blanks, characterized in that it comprises means capable of isolationg at least partly the working area of said blanks from the environment, and comprising, on the one hand, a peripheral wall (25) integral with the upper frame (3), said wall surrounding the die (16) carried by said upper frame and projecting downwardly with respect to said die (16), and, on the other hand, a peripheral groove (26) integral with the lower frame (2), said groove surrounding the die (11) carried by said lower frame and being filled with a divided refractory material (27, 28), in that said lower frame (2) is constitued of a base (6) and of a vertically movable part (7) carrying the die (11) and the peripheral groove (26), in that an inflatabel bladder (8) is interposed between said base (6) and said movable part (7) of said lower frame (2), in that mechanical locking means (10, 22, 23) are provided for interconnecting said base (6) and the upper frame (3) carrying the peripheral wall (25) when said upper frame is in close position, and, in that when said upper frame (3) is in close and locked position with respect to said base (6) of said lower frame (2), the cooperation between the dies (11, 16) is achieved by controlling said bladder (8).

2. Device as claimed in claim 1, characterized in that said bladder (8) is such that its opposed faces rest flat over large surfaces, on the one hand, against said base (6) and, on the other hand, against said movable part (7).

3. Device as claimed in any one of claims 1 or 2, characterized in that said lower frame (2) is movably mounted in order to be moved between a position in which it is plumb with said upper frame (3) and a position in which it is completely out of said plumb position, and vice-versa.

4. Device as claimed in claim 3, characterized in that said mechanical looking means are constitued by removable pins (23) traversing holes (10, 22) made respectively in parts (10, 21) of the lower and upper frames and which coincide when said lower frame (2) is plumb with said upper frame (3) and when the latter is in its close postion.

5. Device as claimed in claim 3 or 4, characterized in that a horizontal moving track (4) is provided for said lower frame (2), and for the upper frame (3), vertical moving means (14) which rest on the support of said horizontal moving track (4).

6. Device as claimed in any one of claims 1 to 5, characterized in that said dies (11, 16) are heated by electric heating platens (12, 17) carrying them.

7. Device as claimed in claim 6, characterized in that said electric heating platens (12, 17) are carried by heat-insulating blocks (13, 18).

## Fig. 1

Fig. 2

Fig. 3

Fig. 4

Fig:5

Fig:6